# EUROPÄISCHE PATENTSCHRIFT

(11) **EP 2 863 131 B1**
(45) Veröffentlichungstag und Bekanntmachung des Hinweises auf die Patenterteilung: **28.11.2018**
(21) Anmeldenummer: 14188529.3
(22) Anmeldetag: 10.10.2014
(51) Int. Cl.: F24D 12/02, F24D 19/10

(54) **Warmwasserverteilersystem und Verteilerventil**
Hot water distributor system and distributor drive
Système de répartition d'eau chaude et vanne de distribution

(30) Priorität: 21.10.2013 DE 102013221315
(43) Veröffentlichungstag der Anmeldung: 22.04.2015
(73) Patentinhaber: Joma-Polytec GmbH, 72411 Bodelshausen (DE)
(72) Erfinder: Heinz, Stefan, 72411 Bodelshausen (DE); Diehl, Benjamin, 72116 Mössingen (DE)
(74) Vertreter: DREISS Patentanwälte PartG mbB

(56) Entgegenhaltungen:
- CH-A- 328 844
- DE-U1-202010 016 095
- FR-A- 1 463 386
- FR-A1- 2 455 700
- JP-A- S 599 453
- US-A- 4 604 991
- US-A1- 2012 090 598

## Beschreibung

Die Erfindung betrifft ein Warmwasserverteilersystem mit wenigstens einem Wärmeerzeuger, einem dem Wärmeerzeuger nachgeschalteten Wasserspeicher und mit wenigstens einem dem Wasserspeicher nachgeschalteten Verbraucher.

Aus dem Stand der Technik sind Warmwasserverteilersysteme bekannt, die beispielsweise einen Wärmeerzeuger in Form einer Öl- oder Gastherme sowie einen Wärmeerzeuger in Form eines Solarkollektors aufweisen. In den Wärmeerzeugern wird warmes Wasser erzeugt, das dann im Wasserspeicher gespeichert wird. Je nach Bedarf des Verbrauchers wird dem Wasserspeicher Wasser entnommen. Sind mehrere Verbraucher vorhanden, beispielsweise verschiedene Heizkreisläufe und/oder Warmwasserstränge, sind diese ebenfalls mit dem Wasserspeicher entsprechend zu verbinden.

Aus der DE 10 2011 111 771 A1 FR 2 455 700, und der JP S59 9453 A ist je ein Wasserwärmeverteilersystem mit den Merkmalen des Oberbegriffs des Anspruchs 1 bekannt. Aus der DE 10 2010 014 767 A1 ist eine Mischeinrichtung zur Erstellung der Wassertemperatur bekannt.

Der vorliegenden Erfindung liegt die Aufgabe zu Grunde, ein bekanntes Warmwasserverteilersystem dahingehend zu verbessern, dass es wirtschaftlicher betrieben werden kann. Auch soll die Installation und das Speichersystem vereinfacht werden.

Diese Aufgabe wird durch ein Warmwasserverteilersystem mit den Merkmalen des Anspruchs 1 gelöst. Insbesondere ist ein Verteilerventil zwischen dem Wärmeerzeuger und dem Speicher vorgesehen, dass zwei Schaltstellungen aufweist. In der ersten Schaltstellung wird vom Wärmeerzeuger kommendes Warmwasser zum Verbraucher geleitet. Dies ist insbesondere dann sinnvoll, wenn Warmwasser vom Wärmeerzeuger in dem Moment erzeugt wird, in dem es am Verbraucher benötigt wird. Eine Umleitung von am Wärmeerzeuger erzeugten Warmwasser zunächst in den Speicher und dann aus dem Speicher zum Verbraucher ist nicht erforderlich. In der zweiten Schaltstellung wird vom Wärmeerzeuger kommendes Warmwasser zum Wasserspeicher geleitet. Diese Schaltstellung ist dann vorteilhaft, wenn in dem Moment, in dem Warmwasser erzeugt wird am Verbraucher kein Warmwasser benötigt wird. Das erzeugte Warmwasser wird folglich in den Wasserspeicher geleitet.

Ferner sind Wärmesensoren zur Messung der Temperatur des vom wenigstens einen Wärmeerzeuger kommenden Warmwassers und/oder Bedarfssensoren zur Feststellung eines Wärmebedarfs an dem wenigstens einen Verbraucher vorgesehen , wobei zusätzlich eine Steuereinheit vorgesehen ist, die in Abhängigkeit von den von den Wärmesensoren und/oder Bedarfssensoren kommenden Sensorsignalen einen das Verteilerventil betätigenden Stellmotor ansteuert. Dadurch kann erreicht werden, dass das Verteilerventil in die jeweilige Schaltstellung in Abhängigkeit von dem Wasserbedarf am Verbraucher und/oder in Abhängigkeit von dem Zustand des Wärmeerzeugers gewählt wird.

Ferner sind wenigstens zwei Wärmeerzeuger vorgesehen. Ein Wärmeerzeuger kann beispielsweise eine Öl- oder Gastherme sein. Ein anderer Wärmeerzeuger kann beispielsweise ein Sonnenkollektor sein, mit dem aus Sonnenenergie Warmwasser erzeugt wird. Das Verteilerventil ist dann zwischen den Wärmeerzeugern und dem wenigstens einen Verbraucher vorgesehen und so ausgebildet, dass es in der ersten Schaltstellung vom ersten Wärmeerzeuger kommendes Wasser zum wenigstens einen Verbraucher leitet. Dies ist dann sinnvoll, wenn in dem Moment, in dem Warmwasser benötigt wird, Warmwasser am ersten Wärmeerzeuger erzeugt wird. Das Wasser wird dann vorzugsweise direkt vom ersten Wärmeerzeuger zum Verbraucher geleitet, und nicht in den Speicher geleitet. Ferner ist vorteilhaft, wenn in der zweiten Schaltstellung vom
ersten Wärmeerzeuger kommendes Warmwasser zum Wasserspeicher geleitet wird. Diese Schaltstellung wird insbesondere dann eingenommen, wenn Warmwasser erzeugt wird, aber kein Warmwasser am Verbraucher benötigt wird. In einer dritten Schaltstellung wird vorteilhafterweise vom zweiten Wärmeerzeuger kommendes Wasser zum wenigstens einen Verbraucher geleitet. Diese Schaltstellung wird dann eingenommen, wenn der zweite Wärmeerzeuger Warmwasser erzeugt und gleichzeitig der Verbraucher Warmwasser benötigt. In der vierten Schaltstellung wird vorzugsweise vom zweiten Wärmeerzeuger kommendes Warmwasser zum Warmwasserspeicher geleitet. Diese Schaltstellung wird dann eingenommen, wenn der zweite Wärmeerzeuger Warmwasser erzeugt, und am Verbraucher kein Warmwasser abgefragt wird. Das erzeugte Warmwasser wird dann in den Speicher geleitet. Ferner ist vorteilhaft, wenn eine fünfte Schaltstellung vorgesehen ist, in der vom Warmwasserspeicher kommendes Warmwasser zum Verbraucher geleitet wird. Diese Schaltstellung wird insbesondere dann eingenommen, wenn Warmwasser benötigt wird und an keinem der Wärmeerzeuger Warmwasser produziert wird; das Warmwasser wird dann folglich insbesondere ausschließlich aus dem Wasserspeicher entnommen.

Folglich ist hierbei vorteilhaft, dass durch Vorsehen eines derartigen Verteilerventils Verteileraufwand eingespart werden kann; mit lediglich einem Verteilerventil können durch das Vorsehen der unterschiedlichen Schaltstellungen die Wärmeerzeuger mit dem Wasserspeicher und dem wenigstens einen Verbraucher entsprechend verbunden werden. Gerade dann, wenn einer der Wärmeerzeuger als Wärmepumpe oder als regenerativer Wärmeerzeuger, beispielsweise als Solarkollektor, ausgebildet ist, und dieser nicht "abgeschaltet" werden kann, ist es dann sinnvoll, in den Speicher zu fördern, wenn am Verbraucher kein Warmwasser benötigt wird. Handelt es sich bei dem Wärmeerzeuger um einen anschaltbaren Wärmeerzeuger, beispielsweise um eine Öl- oder Gastherme, so kann diese abschaltet werden, wenn am Verbraucher kein Warmwasser benötigt wird.

Dabei ist vorteilhaft, wenn das Verteilerventil ferner so ausgebildet ist, dass in der ersten Schaltstellung zudem vom zweiten Wärmeerzeuger kommendes Wasser zum Wärmespeicher geleitet wird. Dies ist dann sinnvoll, wenn während der ersten Schaltstellung, in der vom ersten Wärmeerzeuger kommendes Wasser zum Verbraucher geleitet wird, zeitgleich vom zweiten Wärmeerzeuger, beispielsweise dem Solarkollektor, ebenfalls Warmwasser erzeugt wird. Dieses, vom zweiten Wärmeerzeuger kommende Wasser wird dann in den Wasserspeicher geleitet. Entsprechend ist denkbar, dass in der dritten Schaltstellung, in der vom zweiten Wärmeerzeuger kommendes Warmwasser zum Verbraucher geleitet wird, zugleich vom ersten Wärmeerzeuger kommendes Warmwasser zum Wasserspeicher geleitet wird. Dies ist dann sinnvoll, wenn zudem vom ersten Wärmeerzeuger Warmwasser erzeugt wird; dieses Wasser wird dann vorteilhafterweise dem Wasserspeicher zugeleitet.

Als Verbraucher können insbesondere ein Heizkreislauf, eine Wasserentnahmestelle und/oder ein Wärmetauscher vorgesehen sein. Denkbar sind, dass mehrere Verbraucher an das Verteilerventil angeschlossen sind, so beispielsweise zwei unterschiedliche Heizkreisläufe.

Ferner ist vorteilhaft, wenn als Wärmeerzeuger eine Öl- oder Gastherme, ein Solarkollektor, eine Wärmepumpe, wie eine Erdwärmetherme und/oder ein regenerativer Brennstoff, wie Holzpellets vorgesehen ist.

Insbesondere als vorteilhaft hat sich herausgestellt, wenn zwei oder drei Wärmeerzeuger, beispielsweise eine Öl- oder Gastherme, ein Solarkollektor und ein Holzkessel vorgesehen sind, und wenn zudem beispielsweise ein oder zwei Heizkreisläufe vorgesehen sind.

Das Verteilerventil des erfindungsgemäßen Warmwasserverteilersystems weist ein Gehäuse und eine im Gehäuse vorgesehene Ventilkammer auf. Am Gehäuse sind dabei in die Ventilkammer mündend insbesondere vorgesehen: Wenigstens ein Speicheranschluss, wenigstens ein Verbraucheranschluss und wenigstens ein Wärmeerzeugeranschluss. In der Ventilkammer ist dabei ein Steuerelement vorgesehen, das mehrere Steuerkanäle aufweist. Das Steuerelement ist dabei vorzugsweise in wenigstens zwei Schaltstellungen verstellbar. In der ersten Schaltstellung ist der eine Wärmeerzeugeranschluss über einen Steuerkanal mit dem Verbraucheranschluss verbunden. Diese Schaltstellung wird insbesondere dann eingenommen, wenn am Wärmeerzeuger Wärme erzeugt wird und diese Wärme zeitgleich am Verbraucher benötigt wird. In einer zweiten Schaltstellung wird der Wärmeerzeugeranschluss über einen Steuerkanal mit dem Speicheranschluss verbunden. Diese Schaltstellung wird insbesondere dann eingenommen, wenn der Wärmeerzeuger dann Wärme erzeugt, wenn am Verbraucher keine Wärme benötigt wird.

Durch ein derartiges Verteilerventil kann folglich der Wärmeerzeuger direkt mit dem Verbraucher verbunden werden.

Vorteilhafterweise sind am Verteilerventil beziehungsweise an dessen Gehäuse, wenigstens zwei Wärmeerzeugeranschlüsse vorgesehen, wobei in der ersten Schaltstellung der erste Wärmeerzeugeranschluss mit dem Verbraucheranschluss verbunden ist. In der zweiten Schaltstellung ist der erste Wärmeanschluss mit dem Speicheranschluss verbunden. In der dritten Schaltstellung ist der zweite Wärmerzeugeranschluss mit dem Verbraucheranschluss verbunden. In der vierten Schaltstellung ist der zweite Wärmeerzeugeranschluss mit dem Speicheranschluss verbunden. In der fünften Schaltstellung ist insbesondere der Speicheranschluss mit dem Verbraucheranschluss verbunden. Dadurch können je nach Wärmeerzeugung durch die Wärmeerzeuger entweder der Verbraucheranschluss oder der Speicheranschluss mit dem jeweiligen Wärmeerzeugeranschluss verbunden werden.

Dabei ist vorteilhaft, wenn das Verteilerventil ferner so ausgebildet ist, dass in der ersten Schaltstellung der zweite Wärmeerzeugeranschluss mit dem Speicheranschluss verbunden ist und/oder dass in der dritten Schaltstellung der erste Wärmeerzeugeranschluss mit dem Speicheranschluss verbunden ist. Dies ist dann vorteilhaft, wenn beide Wärmeerzeuger Wärme erzeugen, beispielsweise weil einer der Wärmeerzeuger nicht kurzfristig abgeschaltet werden kann (beispielsweise Solarkollektor). Dabei kann ein Wärmeerzeuger mit dem Verbraucher verbunden werden und der andere Wärmeerzeuger mit dem Speicher.

Die Ventilkammer ist vorzugsweise kreiszylindrisch ausgebildet und wird von einer Mantelfläche und zwei Grundflächen begrenzt. Die Anschlüsse münden dabei vorzugsweise über die Mantelfläche und/oder über wenigstens eine Grundfläche in die Ventilkammer.

Die Steuerkanäle erstrecken sich vorzugsweise wenigstens abschnittsweise in unterschiedlichen Ebenen im oder am Steuerelement. Um zu gewährleisten, dass das Steuerelement zentrisch und dicht in der Ventilkammer aufgenommen wird, sind vorzugsweise Zentriermittel und/oder Dichtmittel vorgesehen.

Ferner ist vorteilhaft, wenn ein Stellmotor zum Verdrehen des Steuerelements in die Schaltstellungen vorgesehen ist. Der Steuermotor kann dabei von einer Steuereinheit angesteuert werden. Die Steuereinheit ihrerseits kann mit entsprechenden Bedarfs- und Wärmesensoren kommunizieren, die einen Wasserbedarf an den jeweiligen Verbrauchern feststellen beziehungsweise eine Wärmeerzeugung an den jeweiligen Wärmerzeugern feststellen.

Vorteilhafterweise sind am Gehäuse insgesamt sechs Anschlüsse vorgesehen, insbesondere drei Wärmeerzeugeranschlüsse, zwei Verbraucheranschlüsse und ein Speicheranschluss.

Vorzugsweise sind das Gehäuse und das Steuerelement aus Kunststoff, insbesondere spritzgegossen hergestellt.

Weitere vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine schematische Darstellung eines erfindungsgemäßen Warmwasserverteilersystems;
- Figur 2: ein Verteilerventil des erfindungsgemäße Warmwasserverteilersystems;
- Figur 3: das Verteilerventil gemäß Figur 1 in Explosionsdarstellung;
- Figur 4: eine Seitenansicht des Verteilerventils gemäß Figur 2;
- Figur 5: eine perspektivische Ansicht auf das geöffnete Verteilerventil gemäß Figur 2;
- Figur 6: eine Draufsicht auf das Verteilerventil gemäß Figur 2 ohne Steuerelement;
- Figur 7: einen Schnitt entlang der Linie VII in Figur 5 in einer ersten Schaltstellung durch das Ventil;
- Figur 8: einen Schnitt entlang der Linie VIII in Figur 5 in der ersten Schaltstellung;
- Figur 9: einen Schnitt gemäß Figur 7 in der zweiten Schaltstellung des Ventils;
- Figur 10: einen Schnitt gemäß der Figur 7 in einer dritten Schaltstellung des Ventils;
- Figur 11: den Schnitt gemäß Figur 7 in einer vierten Schaltstellung des Ventils;
- Figur 12: den Schnitt gemäß Figur 7 in einer fünften Schaltstellung des Ventils;
- Figur 13: den Schnitt gemäß Figur 7 in und einer sechsten Schaltstellung des Ventils; und
- Figur 14: den Schnitt gemäß Figur 7 in und einer siebten Schaltstellung des Ventils.

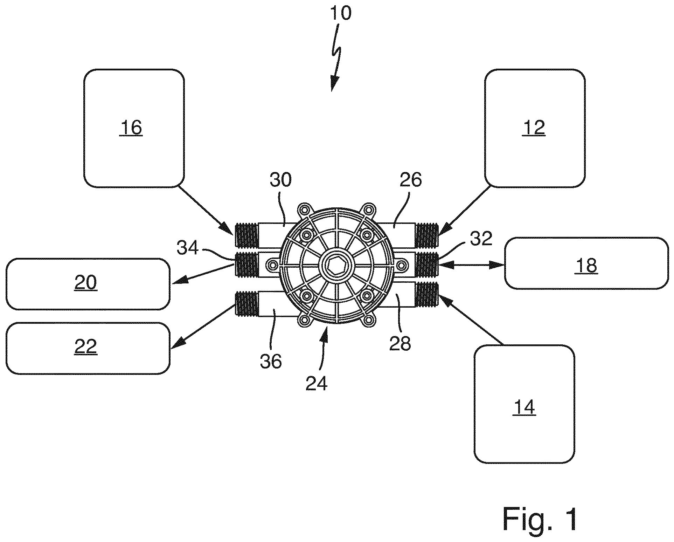

Das in der Figur 1 gezeigte Wasserverteilersystem 10 umfasst insgesamt drei Wärmeerzeuger, nämlich eine Gastherme 12, einen Solarkollektor 14 und eine alternative Wärmequelle 16, insbesondere in Form eines über einer Feuerstelle angebrachten Holzkessels. Das System 10 umfasst ferner einen Wasserspeicher 18 sowie zwei Verbraucherkreise 20 und 22. Die Verbraucherkreise 20 und 22 können getrennte Kreise sein oder gemeinsam in einem Kreislauf münden. Ferner ist ein Verteilerventil 24 vorgesehen, das das von den Wärmeerzeugern 12, 14, 16 erzeugte Warmwasser hin zum Speicher und/oder zu den beiden Verbrauchern 20, 22 verteilt. Dazu kann das Verteilerventil 24, wie nachfolgend noch beschrieben wird, verschiedene Schaltstellungen einnehmen.

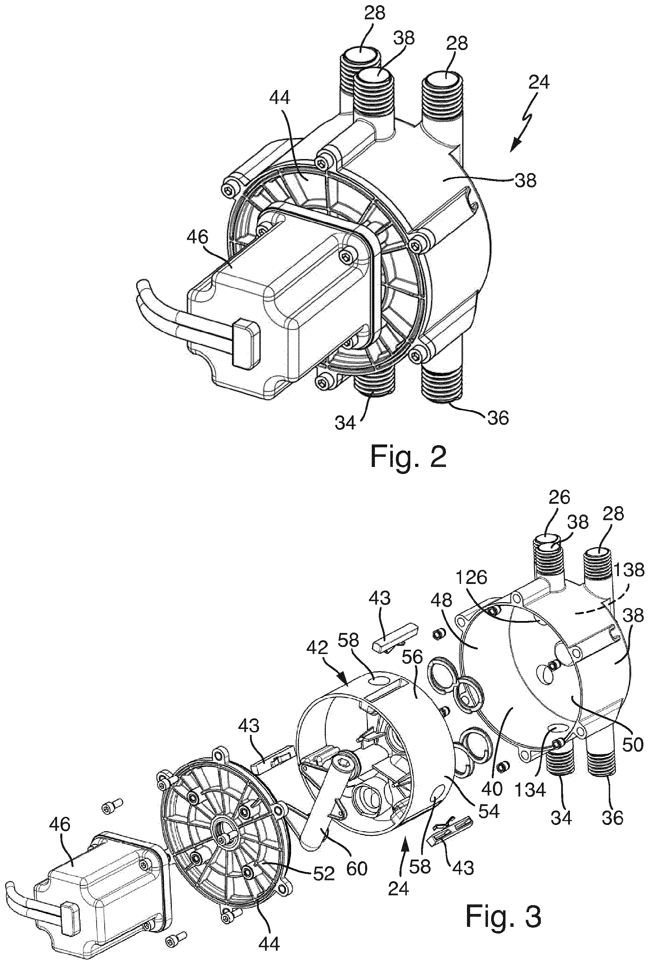

Das Verteilerventil 24 als solches ist in den Figuren 2 bis 6 als Einzelteil dargestellt. Deutlich wird, dass das Verteilerventil 24 insgesamt sechs Anschlüsse 26, 28, 30, 32, 34 und 36 vorsieht. Der Anschluss 26 ist über ein nicht dargestelltes Leitungssystem mit der Gastherme 12 verbunden. Der Anschluss 28 ist mit dem Solarkollektor 14 verbunden. Der Anschluss 30 ist mit dem Holzkessel 16 verbunden. Der Anschluss 32 ist mit dem Wasserspeicher 18 verbunden. Der Anschluss 34 ist mit dem ersten Verbraucher 20 und der Anschluss 36 mit dem zweiten Verbraucher 22 verbunden.

Das Verteilerventil 24 weist ein Gehäuse 38 auf, das eine zylindrische Ventilkammer 40 beherbergt. In der Ventilkammer 40 ist ein Steuerelement 42 vorgesehen, welches um seine Mittellängsachse verdrehbar ist. Die Verdrehung des Steuerelements 42 erfolgt dabei über einen an einem Gehäusedeckel 44 angeflanschten Stellmotor 46.

Die Ventilkammer 40 ist als solche kreiszylindrisch ausgebildet und wird von einer umlaufenden Mantelfläche 48 sowie von zwei einander gegenüberliegenden Grundflächen 50, 52 begrenzt. Die Grundfläche 50 wird dabei vom Gehäuse 38 gebildet; die Grundfläche 52 von einem Gehäusedeckel 44.

In der Ventilkammer 40 ist das komplementär zur Ventilkammer 40 ausgebildete Steuerelement 42 vorgesehen. Das Steuerelement 42 weist folglich eine Mantelfläche 54 auf, deren Außendurchmesser geringfügig kleiner ist als der Innendurchmesser der Mantelfläche 48 des Gehäuses 38. Zudem weist das Steuerelement 42 eine der Grundfläche 50 des Gehäuses 38 zugewandte Gegenfläche 56 auf.

Im montierten Zustand liegt die Gegenfläche 56 des Steuerelements 42 weitestgehend an der Grundfläche 50 des Gehäuses 38 an. Ebenso liegt die Mantelfläche 54 des Steuerelements 42 weitestgehend an der Mantelfläche 48 des Gehäuses 38 an.

Zur zentralen Lagerung des Steuerelements 42 in der Ventilkammer 40 sind am Steuerelement Zentrier- und Dichtmittel 43 vorgesehen, die insbesondere in Figur 3 deutlich zu erkennen sind. Die Zentrier- und Dichtmittel 43 stützen sich einerends am Steuerelement 42 an und liegen andererends an der Mantelfläche 48 des Gehäuses 38 an.

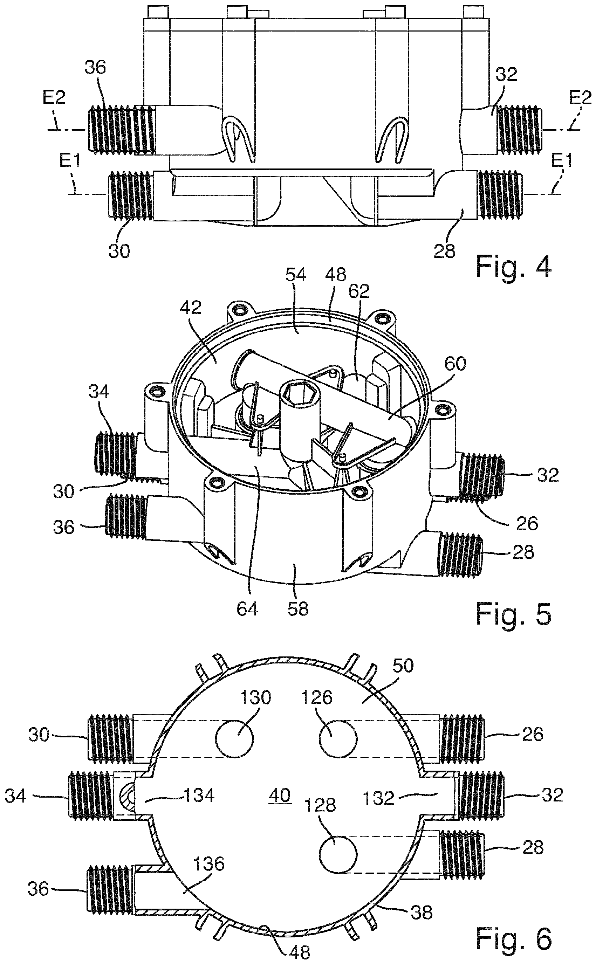

Figur 6 zeigt die Draufsicht auf die Ventilkammer 40 ohne das Steuerelement 42 mit den Anschlüssen 26, 28, 30, 34, 36 und zugehörigen, in die Ventilkammer 40 mündenden Auslässen 126, 128, 130, 132, 134 und 136. Die Auslässe 134, 136 und 132 liegen dabei in der Schnittebene der Figur 6, die der Ebene E2 entspricht. Die Auslässe 126, 128, 130 erstrecken sich nach axial unten und über einen 90° Bogen hin zu den Anschlüssen 26, 28 und 30. Die Auslässe 126, 128, 130 liegen folglich in der Grundfläche 50 der Ventilkammer 40; die Auslässe 134, 136 und 132 liegen in der Mantelfläche 48 der Ventilkammer 40.

Wie insbesondere aus Figur 4 und Figur 6 deutlich wird, liegen die Anschlüsse 26, 28 und 30 in einer unteren Ebene E1 und die Anschlüsse 38, 36 und 34 in einer oberen Ebene E2. Die in der Ebene E1 liegenden Anschlüsse 28, 26 und 30 münden mit den Auslässen 126, 128 und 130 in der Grundfläche 50 des Gehäuses 38. Die in der Ebene E2 liegenden Anschlüsse 32, 34 und 36 münden mit ihren Anschlüssen 132, 134, 136 in der Mantelfläche 48 in die Ventilkammer 40.

Das Steuerelement 42 weist verschiedene Einlässe 58 im Bereich der Mantelfläche 54 sowie im Bereich der Gegenfläche 56 auf. Je nach Drehstellung des Steuerelements 42 korrespondieren unterschiedliche Einlässe 58 mit den jeweiligen Auslässen 126, 128, 130, 132, 134, 136. Dadurch werden unterschiedliche Anschlüsse 26, 28, 30, 32, 34, 36, je nach Drehstellung, miteinander verbunden. Dazu weist das Steuerelement 42 geeignete Steuerkanäle 60, 62 und 64 auf. Dabei verbindet jeweils ein Steuerkanal 60, 62, 64 zwei am Steuerelement 42 vorgesehene Einlässe 58.

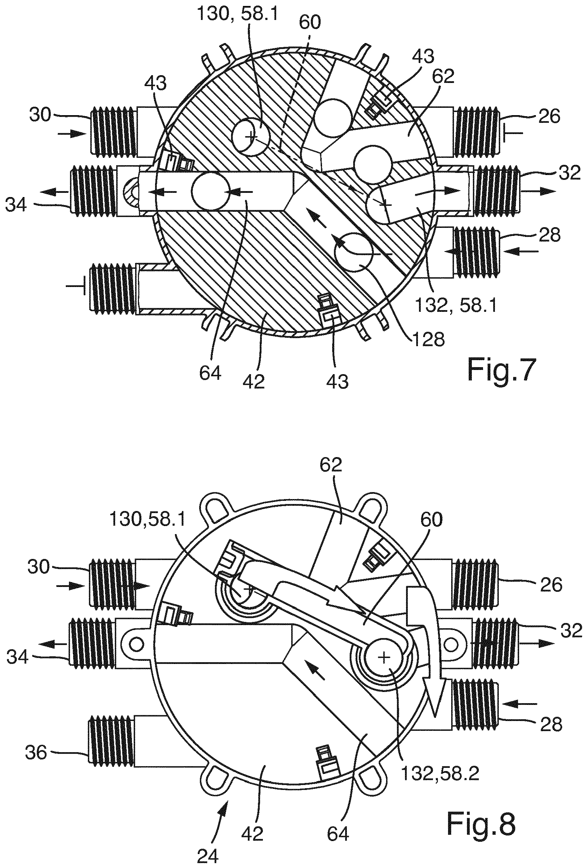

Aus den Figuren 5 und 8 wird deutlich, dass die beiden Steuerkanäle 62 und 64 in der Ebene E2 liegen und dass der Steuerkanal 60 in einer darüber liegenden Ebene liegt. Der Steuerkanal 60 ist dabei als separates Bauteil ausgebildet, das wenigstens abschnittsweise oberhalb des Steuerkanals 62 liegt.

Bei der in der Figur 7 und 8 gezeigten ersten Schaltstellung des Steuerelements 42 werden zum einen die Anschlüsse 28 und 34 über den Steuerkanal 64 miteinander verbunden und zum anderen die Anschlüsse 30 und 32 über den Steuerkanal 60. Zum einen wird folglich vom Solarkollektor 14 erzeugtes Warmwasser über den Anschluss 28 hin zum Verbraucher 20 geleitet. Für den Fall, das zeitgleich am Holzkessel 16 Warmwasser erzeugt wird, wird dieses über die Anschlüsse 30 und 32 in den Speicher 18 geleitet.

In der Figur 7 ist der Schnitt durch das Verteilerventil 24 entlang der Ebene E2 gezeigt. Deutlich zu erkennen ist, dass der Auslass 128 des Anschlusses 28 mit dem Steuerkanal 64 korrespondiert, der im Anschluss 34 mündet. Ferner ist deutlich zu erkennen, dass der Auslass 130 des Anschlusses 30 mit dem in Figur 7 nicht gezeigten Steuerkanal 60 korrespondiert, der im Auslass 132 beziehungsweise am Anschluss 32 mündet.

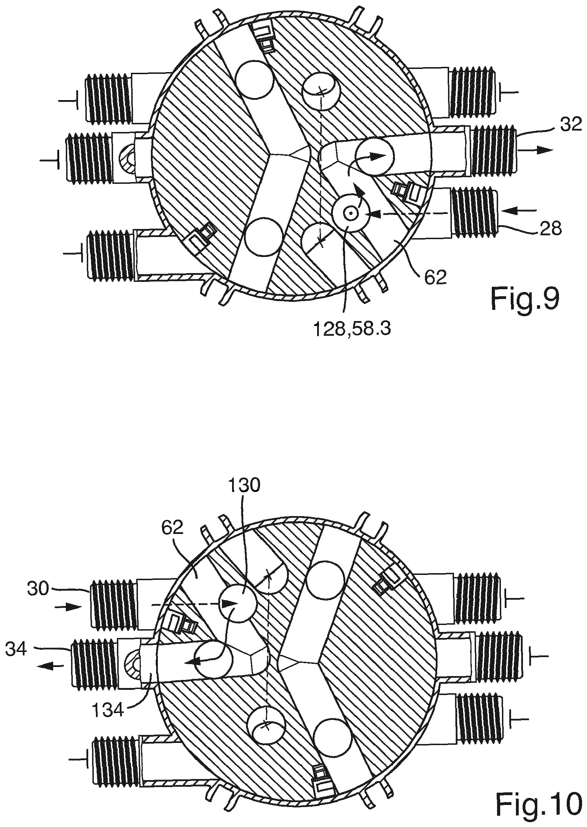

In der in Figur 9 gezeigten Schaltstellung des Steuerelements 40 kann vom Solarkollektor 14 erwärmtes Wasser über den Anschluss 28 in den Steuerkanal 62 einströmen und durch den Anschluss 32 in den Speicher 18 abströmen. Die restlichen Anschlüsse werden dabei vom Steuerelement 42 geschlossen.

Wir ausgehend von Figur 9 das Steuerelement 42 weiter in die in Figur 10 gezeigte Lage verdreht, so wird über den Steuerkanal 62 der Anschluss 30 mit dem Anschluss 34 verbunden. Diese dritte Schaltstellung ist dann wünschenswert, wenn am Holzkessel 16 Warmwasser erzeugt wird und dies dem Verbraucher zugeführt werden soll. Die anderen Anschlüsse sind dabei verschlossen.

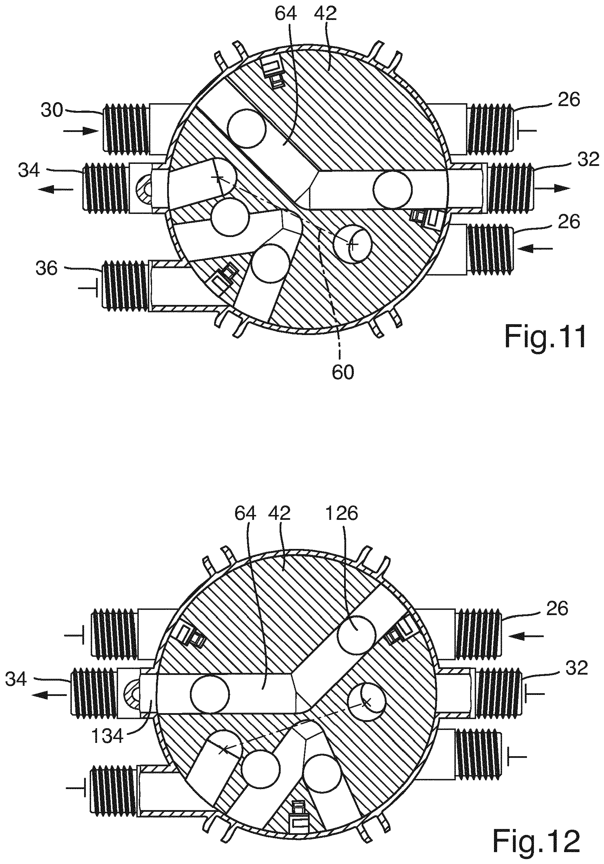

Wird das Steuerelement 42 in die in Figur 11 gezeigte vierte Schaltstellung verdreht, so wird über den Steuerkanal 64 der Anschluss 30 mit dem Anschluss 32 verbunden. Zugleich wird der Anschluss 28 über den Steuerkanal 60 mit dem Anschluss 34 verbunden. Letztendlich entspricht diese Schaltstellung, wie sie in Figur 11 gezeigt ist, der Schaltstellung, wie sie in Figur 7 gezeigt ist.

Wird das Steuerelement 42 in die in der Figur 12 gezeigte Schaltstellung gedreht, so wird der Anschluss 26 über die Steuerleitung 64 mit dem Anschluss 34 verbunden. Von der Gastherme erzeugtes Warmwasser kann folglich zum Verbraucher hin geleitet werden. Die anderen Anschlüsse sind in dieser Schaltstellung verschlossen. Diese Schaltstellung ist insbesondere dann sinnvoll, wenn anstelle der Gastherme ein nicht abstellbarer Wärmeerzeuger, wie beispielsweise eine Wärmepumpe, an den Anschluss 26 angeschlossen ist.

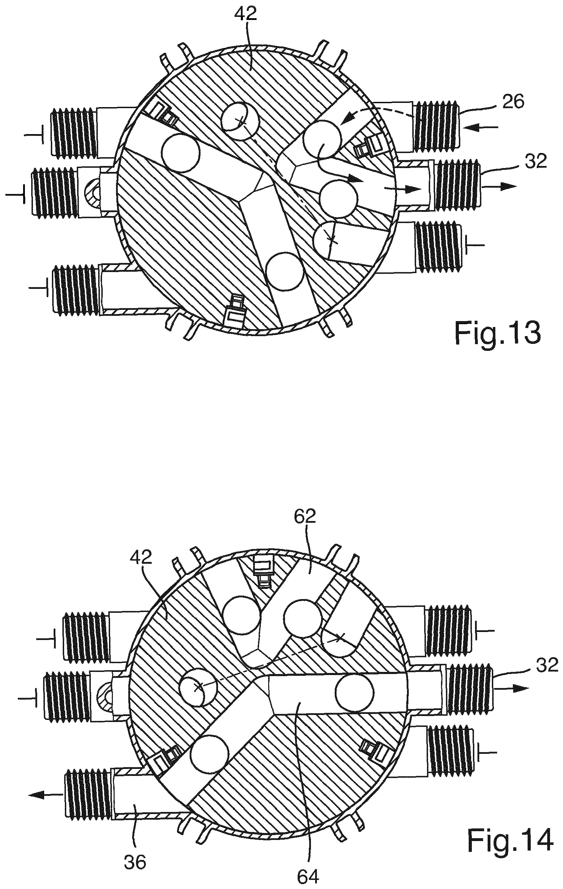

Wird das Steuerelement 42 in die in Figur 13 gestellte Schaltposition verdreht, so wird von der Gastherme erzeugtes Wasser über den Anschluss 26 und den Steuerkanal 62 hin zum Anschluss 32 geleitet, und kann in den Speicher 18 einströmen. Die anderen Anschlüsse sind dabei verschlossen.

Bei Verdrehen des Steuerelements 42 in die in Figur 14 gezeigte Schaltposition wird der Speicher 18 über den Anschluss 32 und den Steuerkanal 64 mit dem Anschluss 36, und damit mit dem Verbraucher 22 verbunden. Die anderen Anschlüsse sind in dieser Schaltstellung verschlossen.

Das in Figur 1 gezeigte System 10 kann zudem Sensoren umfassen, die insbesondere den Warmwasserbedarf an den Verbrauchern 20, 22 feststellen. Zudem kann das System Sensoren umfassen, die feststellen, ob insbesondere die Wärmeerzeuger 12, 14, 16 Wärme produzieren. Ferner können Sensoren vorgesehen sein, die die Temperatur des Warmwassers im Speicher 18 feststellen. Je nachdem, ob an den Verbrauchern 20, 22 Warmwasserbedarf besteht und ob, beziehungsweise welcher der Wärmeerzeuger 12, 14, 16 warmes Wasser erzeugt, kann über eine Steuereinheit der Stellmotor 46 in eine geeignete Schaltstellung verdreht werden.

Das in Figur 1 beschriebene Wasserverteilersystem 10 beziehungsweise das in den Figuren 2 bis 13 zugehörige, beschriebene Verteilerventil 24 zeichnet sich dadurch aus, dass bedarfsorientiert in den Wärmeerzeugern 12, 14, 16 erzeugtes Warmwasser den Verbrauchern 20, 22 oder dem Speicher 18 auf vergleichsweise einfache Art und Weise durch das Verteilerventil 24 zugeführt werden kann.

## Patentansprüche

1. Warmwasserverteilersystem (10) mit wenigstens einem Wärmeerzeuger (12, 14, 16), einem dem Wärmeerzeuger (12, 14, 16) nachgeschaltetem Wasserspeicher (18) und mit wenigstens einem dem Wasserspeicher (18) nachgeschaltetem Verbraucher (20, 22), wobei ein Verteilerventil (24) mit wenigstens zwei Schaltstellungen zwischen dem Wärmeerzeuger (12, 14, 16) und dem Speicher (18) derart vorgesehen ist, dass in einer ersten Schaltstellung vom Wärmeerzeuger (12, 14, 16) kommendes Warmwasser zum Verbraucher (20, 22) geleitet wird und dass in einer zweiten Schaltstellung vom Wärmeerzeuger (12, 14, 16) kommendes Warmwasser zum Wasserspeicher (18) geleitet wird, **dadurch gekennzeichnet,**
**dass** wenigstens zwei Wärmeerzeuger (12, 14, 16) vorgesehen sind und das Verteilerventil (24) so ausgebildet ist, dass in der ersten Schaltstellung vom ersten Wärmeerzeuger (12) kommendes Warmwasser zum wenigstens einen Verbraucher (20, 22) geleitet wird,
**dass** in der zweiten Schaltstellung vom ersten Wärmeerzeuger (18) kommendes Warmwasser zum Wasserspeicher (18) geleitet wird,
**dass** in einer drittem Schaltstellung vom zweiten Wärmeerzeuger (14) kommendes Warmwasser zum wenigstens einen Verbraucher (20, 22) geleitet wird,
**dass** in einer vierten Schaltstellung vom zweiten Wärmeerzeuger (14) kommendes Warmwasser zum Wasserspeicher (18) geleitet wird, und/oder dass in einer fünfen Schaltstellung vom Wasserspeicher (18) kommendes Warmwasser zum wenigstens einen Verbraucher (20, 22) geleitet wird,
wobei ferner Wärmesensoren zur Messung der Temperatur des vom wenigstens einen Wärmeerzeuger (12, 14, 16) kommenden Warmwassers und/oder Bedarfssensoren zur Feststellung eines Wärmebedarfs an dem wenigstens einen Verbraucher (20, 22) vorgesehen sind und dass eine Steuereinheit vorgesehen ist, die in Abhängigkeit von den von den Wärmesensoren und/oder Bedarfssensoren kommenden Sensorsignalen einen das Verteilerventil (24) betätigenden Stellmotor (46) ansteuert.

2. Warmwasserverteilersystem (10) nach Anspruch 1, **dadurch gekennzeichnet, dass** das Verteilerventil (24) ferner so ausgebildet ist, dass in der ersten Schalstellung vom zweiten Wärmeerzeuger (14) kommendes Warmwasser zum Wasserspeicher (18) geleitet wird und/oder dass in der dritten Schalstellung vom ersten Wärmeerzeuger (12) kommendes Warmwasser zum Wasserspeicher (18) geleitet wird.

3. Warmwasserverteilersystem (10) nach Anspruch 1 oder 2, **dadurch gekennzeichnet, dass** der wenigstens eine Verbraucher (20, 22) ein Heizkreislauf ist, eine Wasserentnahmestelle und/oder ein Wärmetauscher ist.

4. Warmwasserverteilersystem (10) nach einem der vorhergehenden Ansprüche, **dadurch gekennzeichnet, dass** der wenigstens eine Wärmeerzeuger (12, 14, 16) eine Öl- oder Gastherme, ein Solarkollektor, eine Wärmepumpe und/oder ein Holz-Pellets-Brenner ist.

5. Warmwasserverteilersystem (10) nach einem der vorhergehenden Ansprüche, **dadurch gekennzeichnet, dass** das Verteilerventil (24) ein Gehäuse (38) und eine im Gehäuse (38) vorgesehene Ventilkammer (40) aufweist, wobei am Gehäuse in die Ventilkammer mündend vorgesehen sind:
wenigstens ein Speicheranschluss (32),
wenigstens ein Verbraucheranschluss (34, 36) und
wenigstens ein Wärmeerzeugeranschluss (26, 28, 30),
wobei in der Ventilkammer (40) ein Steuerelement (42) mit Steuerkanälen (60, 62, 64) vorgesehen ist,
wobei das Steuerelement (42) in wenigstens zwei Schaltstellungen derart verdrehbar ist,
dass in einer ersten Schaltstellung der Wärmeerzeugeranschluss (26, 28, 30) über einen Steuerkanal (60, 62, 64) mit dem Verbraucheranschluss (34, 36) verbunden ist und in einer zweiten Schaltstellung der Wärmeerzeugeranschluss (26, 28, 30) über einen Steuerkanal (60, 62, 64) mit dem Speicheranschluss (32) verbunden ist,
wobei wenigstens zwei Wärmeerzeugeranschlüsse (26, 28, 30) vorgesehen sind und
dass in der ersten Schaltstellung der ersten Wärmeerzeugeranschluss (28, 26) mit dem Verbraucheranschluss (34, 36) verbunden ist,
dass in der zweiten Schaltstellung der erste Wärmeerzeugeranschluss (28, 26) mit dem Speicheranschluss (32) verbunden ist,
dass in einer drittem Schaltstellung der zweite Wärmeerzeugeranschluss (26, 28) mit dem Verbraucheranschluss (34, 36) verbunden ist,
dass in einer vierten Schaltstellung der erste Wärmeerzeugeranschluss (28, 26) mit dem Speicheranschluss (32) verbunden ist, und
dass in einer fünfen Schaltstellung der Speicheranschluss (32) mit dem Verbraucheranschluss (34, 36) verbunden ist.

6. Warmwasserverteilersystem (10) nach Anspruch 5, **dadurch gekennzeichnet, dass** das Verteilerventil (24) ferner so ausgebildet ist, dass in der ersten Schalstellung der zweite Wärmeerzeugeranschluss (26, 28) mit dem Speicheranschluss (32) verbunden ist
und/oder dass in der dritten Schalstellung der erste Wärmeerzeugeranschluss (28, 26) mit dem Speicheranschluss (32) verbunden ist.

7. Warmwasserverteilersystem (10) nach Anspruch 5 oder 6, **dadurch gekennzeichnet, dass** die Ventilkammer (40) kreiszylindrisch ausgebildet ist und von einer Mantelfläche (48) und zwei Grundflächen (50, 52) begrenzt wird, wobei die Anschlüsse über die Mantelfläche (48) und/oder über wenigstens eine Grundfläche (50) in die Ventilkammer (40) mündet.

8. Warmwasserverteilersystem (10) nach einem der Ansprüche 5 bis 7, **dadurch gekennzeichnet, dass** die Steuerkanäle (60, 62, 64) wenigstens abschnittsweise in unterschiedlichen Ebenen (E1, E2) im oder am Steuerelement (42) vorgesehen sind.

9. Warmwasserverteilersystem (10) nach einem der Ansprüche 5 bis 8, **dadurch gekennzeichnet, dass** Zentrier-, Dicht- und/oder Vorspannmittel (43) zum radialen Zentrieren, Dichten und/oder Vorspannen des Steuerelements (42) in der Ventilkammer (40) vorgesehen sind.

10. Warmwasserverteilersystem (10) nach einem der Ansprüche 5 bis 9, **dadurch gekennzeichnet, dass** am Gehäuse (38) ein Stellmotor (46) zum Verdrehen des Steuerelements (42) in die Schaltstellungen vorgesehen ist.

11. Warmwasserverteilersystem (10) nach einem der Ansprüche 5 bis 10, **dadurch gekennzeichnet, dass** am Gehäuse (38) insgesamt sechs Anschlüsse vorgesehen sind, insbesondere drei Wärmeerzeugeranschluss (26, 28, 30), zwei Verbraucheranschlüsse (20, 22) und ein Speicheranschluss (18) .

12. Warmwasserverteilersystem (10) nach einem der Ansprüche 5 bis 11, **dadurch gekennzeichnet, dass** das Gehäuse (38) und das Steuerelement (42) aus Kunststoff hergestellt sind.

## Claims

1. Hot water distribution system (10), comprising at least one heat generator (12, 14, 16), a boiler (18) downstream of the heat generator (12, 14, 16) and at least one consumer (20, 22) downstream of the boiler (18), wherein a distributor valve (24) having at least two switching positions is provided between the heat generator (12, 14, 16) and the boiler (18) in such a way that in a first switching position hot water coming from the heat generator (12, 14, 16) is guided to the consumer (20, 22) and that in a second switching position hot water coming from the heat generator (12, 14, 16) is directed to the boiler (18), **characterized in that**
at least two heat generators (12, 14, 16) are provided and the distributor valve (24) is configured in such a way that in the first switching position hot water coming from the first heat generator (12) is guided to the at least one consumer (20, 22),
that in the second switching position hot water coming from the heat generator (12) is guided to the boiler (18),
that in a third switching position hot water coming from the second heat generator (14) is guided to the at least one consumer (20, 22),
that in a fourth switching position hot water coming from the second heat generator (14) is guided to the boiler (18), and/or
that in a fifth switching position hot water coming from the boiler (18) is guided to the at least one consumer (20, 22),
wherein further heat sensors for measuring the temperature of the hot water coming from the at least one heat generator (12, 14, 16) and/or requirement sensors for determining a heat requirement at the at least one consumer (20, 22) are provided, and that a control is provided which drives a servomotor (46) actuating the distributor valve (24) in response to sensor signals coming from the heat sensors and/or requirement sensors.

2. Hot water distribution system (10) as claimed in claim 1, **characterized in that** the distributor valve (24) is further configured in such a way that in the first switching position hot water coming from the second heat generator (14) is guided to the boiler (18) and/or that in the third switching position hot water coming from the first heat generator (12) is guided to the boiler (18).

3. Hot water distribution system (10) as claimed in claim 1 or 2, **characterized in that** the at least one consumer (20, 22) is a heating circulation, a water tap and/or a heat exchanger.

4. Hot water distribution system (10) as claimed in one of the preceding claims, **characterized in that** the at least one heat generator (12, 14, 16) is an oil or gas water heater, a solar collector, a heat pump and/or a wood-pellet stove.

5. Hot water distribution system (10) as claimed in one of the preceding claims, **characterized in that** the distributor valve (24) has a housing (38) and a valve chamber (40) provided in the housing (38), wherein at the housing and opening into the valve chamber, there are provided:
at least one boiler connection (32),
at least one consumer connection (34, 36) and
at least one heat generator connection (26, 28, 30),
wherein a control element (42) having control channels (60, 62, 64) is provided in the valve chamber (40),
wherein the control element (42) can be rotated in at least two switching positions in such a way that in a first switching position the heat generator connection (26, 28, 30) is connected to the consumer connection (34, 36) via a control channel (60, 62, 64), and in a second switching position, the heat generator connection (26, 28, 30) is connected to the boiler connection (32) via a control channel (60, 62, 64),
wherein at least two heat generator connections (26, 28, 30) are provided, and
that in the first switching position, the first heat generator connection (28, 26) is connected to the consumer connection (34, 36),
that in the second switching position, the first heat generator connection (28, 26) is connected to the boiler connection (32),
that in a third switching position, the second heat generator connection (26, 28) is connected to the consumer connection (34, 36),
that in a fourth switching position the first heat generator connection (28, 26) is connected to the boiler connection (32), and
that in a fifth switching position, the boiler connection (32) is connected to the consumer connection (34, 36).

6. Hot water distribution system (10) as claimed in claim 5, **characterized in that** the distributor valve (24) is further configured in such a way that in the first switching position, the second heat generator connection (26, 28) is connected to the boiler connection (32),
and/or that in the third switching position the first heat generator connection (28, 26) is connected to the boiler connection (32).

7. Hot water distribution system (10) as claimed in claim 5 or 6, **characterized in that** the valve chamber (40) is configured as a circular cylinder and is delimited by a cylinder surface (48) and two bases (50, 52), the connections opening into the valve chamber (40) via the cylinder surface (48) and/or via at least one basis (50).

8. Hot water distribution system (10) as claimed in one of claims 5 to 7, **characterized in that** at least sections of the control channels (60, 62, 64) are provided in or at the control element (42) in different levels (E1, E2).

9. Hot water distribution system (10) as claimed in one of claims 5 to 8, **characterized in that** centering, sealing and/or biasing means (43) for radially centering, sealing and/or biasing the control element (42) in the valve chamber (40) are provided.

10. Hot water distribution system (10) as claimed in one of claims 5 to 9, **characterized in that** a servomotor (46) for rotating the control element (42) into its switching positions is provided at the housing (38).

11. Hot water distribution system (10) as claimed in one of claims 5 to 10, **characterized in that** a total of six connections are provided at the housing (38), in particular three heat generator connections (26, 28, 30), two consumer connections (20, 22) and one boiler connection (18).

12. Hot water distribution system (10) as claimed in one of claims 5 to 11, **characterized in that** the housing (38) and the control element (42) are made of plastics.

## Revendications

1. Système de distribution d'eau chaude (10) comprenant au moins un générateur de chaleur (12, 14, 16), un accumulateur d'eau (18) monté en aval du générateur de chaleur (12, 14, 16) et au moins un consommateur (20, 22), branché en aval de l'accumulateur d'eau (18), une vanne de distribution (24) ayant au moins deux positions de commutation étant montée entre le générateur de chaleur (12, 14, 16) et l"accumulateur (18) de sorte que, dans une première position de commutation de l'eau chaude provenant du générateur de chaleur (12, 14, 16) soit transférée vers le consommateur (20, 22) et que dans une seconde position de commutation de l'eau chaude provenant du générateur de chaleur (12, 14, 16) soit transférée vers l'accumulateur d'eau (18),
**caractérisé en ce qu'**
il est prévu au moins deux générateurs de chaleur (12, 14, 16) et la vanne de distribution (24) est réalisée de sorte que, dans la première position de commutation, de l'eau chaude provenant du premier générateur de chaleur (12) soit transférée vers le consommateur (20, 22), que, dans la seconde position de commutation de l'eau chaude provenant du premier générateur de chaleur (12) soit transférée vers l'accumulateur d'eau (18), que, dans une troisième position de commutation de l'eau chaude provenant du second générateur de chaleur (14) soit transférée vers au moins un consommateur (20, 22), que, dans une quatrième position de commutation de l'eau chaude provenant du second générateur de chaleur (14) soit transférée vers l'accumulateur d'eau (18), et/ou, que dans une cinquième position de commutation de l'eau chaude provenant de l'accumulateur d'eau (18) soit transférée vers au moins un consommateur (20, 22), et il est en outre prévu des capteurs de chaleur permettant de mesurer la température de l'eau chaude provenant d'au moins un générateur de chaleur (12, 14, 16) et/ou des capteurs de demande permettant de déterminer une demande de chaleur au niveau du consommateur (20, 22), ainsi qu'une unité de commande qui, en fonction des signaux provenant des capteurs de chaleur et/ou des capteurs de demande commandent un servomoteur (46) actionnant la vanne de distribution (24).

2. Système de distribution d'eau chaude (10) conforme à la revendication 1,
**caractérisé en ce que**
la vanne de distribution (24) est en outre réalisée de sorte que, dans la première position de commutation, de l'eau chaude provenant du second générateur de chaleur (14) soit transférée vers l'accumulateur d'eau (18) et/ou que dans la troisième position de commutation de l'eau chaude provenant du premier générateur de chaleur (12) soit transférée vers l'accumulateur d'eau (18).

3. Système de distribution d'eau chaude (10) conforme à la revendication 1 ou 2,
**caractérisé en ce que**
le consommateur (20, 22) est un circuit d'eau chaude, un emplacement de prélèvement d'eau et/ou un échangeur de chaleur.

4. Système de distribution d'eau chaude (10) conforme à l'une des revendications précédentes,
**caractérisé en ce que**
le générateur de chaleur (12, 14, 16) est une chaudière à huile ou à gaz, un collecteur solaire, une pompe à chaleur et/ou un brûleur à granulés de bois.

5. Système de distribution d'eau chaude (10) conforme à l'une des revendications précédentes,
**caractérisé en ce que**
la vanne de distribution (24) comporte un carter (38) et une chambre de vanne (40) située dans le carter (38), sur le carter et débouchant dans la chambre de vanne sont prévus :
au moins un raccord d'accumulateur (32),
au moins un raccord de consommateur (34, 36), et
au moins un raccord de générateur de chaleur (26, 28, 30),
un élément de commande (42) équipé de canaux de commande (60, 62, 64) est monté dans la chambre de vannes (40),
l'élément de commande (42) peut être déplacé par rotation dans au moins deux positions de commutation de sorte que, dans une première position de commutation le raccord de générateur de chaleur (26, 28, 30) soit relié par un canal de commande (60, 62, 64) au raccord de consommateur (34, 36) et que, dans une seconde position de commutation la raccord de générateur (26, 28, 30) soit relié par un canal de commande (60, 62, 64) au raccord d'accumulateur (32),
au moins deux raccords de générateur de chaleur (26, 28, 30) étant prévus, et
dans la première position de commutation le premier raccord de générateur de chaleur (28, 26) est relié au raccord de consommateur (34, 36), dans la seconde position de commutation le premier raccord de générateur de chaleur (28, 26) est relié au raccord d'accumulateur (32),
dans une troisième position de commutation le second raccord de générateur de chaleur (26, 28) est relié au raccord de consommateur (34, 36),
dans une quatrième position de commutation le premier raccord de générateur de chaleur (28, 26) est relié au raccord de d'accumulateur (32), et
dans une cinquième position de commutation le raccord d'accumulateur (32) est relié au raccord de consommateur (34, 36).

6. Système de distribution de chaleur (10), conforme à la revendication 5,
**caractérisé en ce que**
la vanne de distribution (24) est en outre réalisée de sorte que, dans la première position de commutation le second raccord de générateur de chaleur (26, 28) soit relié au raccord d'accumulateur (32) et/ou que dans la troisième position de commutation le premier raccord de générateur de chaleur (28, 26) soit relié au raccord d'accumulateur (32).

7. Système de distribution de chaleur (10) conforme à la revendication 5 ou 6,
**caractérisé en ce que**
la chambre de vanne (40) est en forme de cylindre circulaire et est délimitée par une surface enveloppe (48) et par deux surfaces de base (50, 52), les raccords débouchant dans la chambre de vanne (40) par la surface enveloppe (48) ou par au moins une surface de base (50).

8. Système de distribution d'eau chaude (10) conforme à l'une des revendication 5 à 7,
**caractérisé en ce que**
les canaux de commande (60, 62, 64) sont situés au moins par zone dans différents plans (E1, E2) dans ou sur l'élément de commande (42).

9. Système de distribution d'eau chaude (10) conforme à l'une des revendications 5 à 8,
**caractérisé en ce qu'**
il est prévu des moyens de centrage, d'étanchéité et/ou précontrainte (43) pour permettre d'obtenir un centrage radial, une étanchéité et/ou une précontrainte de l'élément de commande (42) dans la chambre de vanne (40).

10. Système de distribution d'eau chaude (10) conforme à l'une de revendications 5 à 9,
**caractérisé en ce qu'**
il est prévu sur le carter (38) un servomoteur (46) pour permettre de déplacer l'élément de commande (42) par rotation dans les positions de commutation.

11. Système de distribution d'eau chaude (10) conforme à l'une des revendications 5 à 10,
**caractérisé en ce que**
sur le carter (38) sont prévus au total six raccords en particulier trois raccords de générateur de chaleur (26, 28, 30), deux raccords de consommateur (20, 22) et un raccord d'accumulateur (18).

12. Système de distribution d'eau chaude (10) conforme à l'une des revendications 5 à 11,
**caractérisé en ce que**
le carter (38) et l'élément de commande (42) sont réalisés en matériau synthétique.
